# EUROPÄISCHE PATENTSCHRIFT

(11) **EP 2 190 110 B1**
(45) Veröffentlichungstag und Bekanntmachung des Hinweises auf die Patenterteilung: **10.10.2012**
(21) Anmeldenummer: 08169831.8
(22) Anmeldetag: 25.11.2008
(51) Int. Cl.: H02M 7/72, H02J 3/38

(54) **Ermittlung der Belastbarkeit einer über einen Wechselrichter und einen Netzschalter an ein Stromnetz anschließbaren Gleichspannungsquelle**
Determining the rating of a direct voltage source being connectable via an inverter and a power switch to an electricity network
Détermination de la capacité de charge d'une source de courant continu pouvant être connectée au réseau sur un interrupteur et un onduleur au réseau

(43) Veröffentlichungstag der Anmeldung: 26.05.2010
(73) Patentinhaber: SMA Solar Technology AG, 34266 Niestetal (DE)
(72) Erfinder: Ahlborn, Alexander, Dr. rer. nat., 34121 Kassel (DE); Groote, Wilfried, Dipl.- Ing., 34246 Vellmar (DE); Reichenbächer, Wolfgang, Dipl.-Ing, 34355 Staufenberg (DE)
(74) Vertreter: Rehberg Hüppe + Partner

(56) Entgegenhaltungen:
- DE-A1- 4 325 436
- DE-A1- 4 328 511
- US-A1- 2005 018 454

## Beschreibung

Die Erfindung bezieht sich auf ein Verfahren zur Ermittlung der Belastbarkeit einer über einen Wechselrichter und einen Netzschalter einem Wechselstromnetz mit einer vorgegebenen Netzfrequenz zuschaltbaren Gleichspannungsquelle, das die Merkmale des Oberbegriffs des unabhängigen Patentanspruchs 1 aufweist, sowie auf eine Vorrichtung zur Umsetzung dieses Verfahrens.

Insbesondere ist die vorliegende Erfindung zur Anwendung bei der dezentralen Einspeisung in ein Wechselstromnetz vorgesehen, bei dem es sich um ein Energieversorgungsnetz, ein Inselnetz, aber auch um die Energieversorgung eines einzelnen Verbrauchers handeln kann. Dabei dient der Wechselrichter dazu, aus der von der Gleichspannungsquelle, zum Beispiel einer Photovoltaik-, Wind-, Wasserkraftanlage oder einem Gleichstromgenerator, generierten Gleichspannung eine netzkonforme Wechselspannung zu erzeugen und elektrische Leistung von der Gleichspannungsquelle in das Wechselstromnetz einzuspeisen.

Für die gewünschte Maximierung des Anteils an regenerativen Energien am Gesamtenergieverbrauch ist in jedem der genannten Fälle eine möglichst frühzeitige und dauerhafte Netzzuschaltung der Gleichspannungsquelle wünschenswert. Gleichzeitig ist einer möglichst großen Schonung aller Bauteile einer hierfür verwendeten Vorrichtung Rechnung zu tragen, um eine möglichst lange Betriebsdauer dieser Vorrichtung zu erreichen. Die Zuschaltung sollte daher, wenn die Gleichspannungsquelle eine hierfür ausreichende Belastbarkeit aufweist, sofort erfolgen, aber nicht schon früher.

### STAND DER TECHNIK

Im einfachsten Fall wird die Belastbarkeit der Gleichspannungsquelle vor ihrer Netzzuschaltung über den Wechselrichter aus ihrer Leerlaufspannung abgeleitet. Diese ohne auf die Gleichspannungsquelle einwirkende Lasten vorliegende Leerlaufspannung spiegelt die augenblickliche Leistungsfähigkeit der Gleichspannungsquelle jedoch nicht ausreichend wider. So kann zum Beispiel ein Photovoltaikmodul, wenn beim morgendlichen Zuschalten widrige Wetterbedingungen herrschen, trotz Erreichens des für die Netzzuschaltung erforderlichen Spannungsschwellwerts nicht genügend Leistung bereitstellen, um den nachgeschalteten Wechselrichter nach Abzug von dessen Eigenbedarf, das ist der für den Betrieb des Wechselrichters erforderliche Bedarf, dauerhaft im Einspeisebetrieb am Wechselstromnetz zu halten. Dies hat zur Folge, dass der Wechselrichter kurz nach erfolgter Zuschaltung zum Netz wieder vom Netz getrennt werden muss. Die hieraus resultierenden zusätzlichen Schaltungsoperationen begrenzen die Lebensdauer, insbesondere diejenige des Netzschalters, erheblich.

Bei einem Verfahren mit den Merkmalen des Oberbegriffs des unabhängigen Patentanspruchs 1 wird eine Eingangsgleichspannung, die die Ausgangsspannung der Gleichspannungsquelle oder die Spannung eines Zwischenkreises des Wechselrichters sein kann, bei noch geöffnetem Netzschalter aber bereits angesteuertem Wechselrichter erfasst, so dass auf die Gleichspannungsquelle der Eigenbedarf des Wechselrichters als kleine Prüflast einwirkt. Die Ausgangsspannung der Gleichspannungsquelle ist damit nicht mehr ihre reine Leerlaufspannung. Der Eigenbedarf des Wechselrichters ist jedoch regelmäßig zu klein, um als Prüflast für die Netzzuschaltung der Gleichstromquelle auszureichen. Das heißt, die mit Hilfe des Eigenbedarfs ermittelte Belastbarkeit der Gleichspannungsquelle sagt immer noch zu wenig über deren Belastbarkeit bei ihrer Netzzuschaltung aus.

Um eine Gleichspannungsquelle vor ihrer Netzzuschaltung über einen Wechselrichter mit einer höheren Prüflast zu beaufschlagen, ist es aus der DE 43 25 436 C2 bekannt, bei geöffnetem Netzschalter einen Kurzschluss der Gleichspannungsquelle durch den Wechselrichter zu verursachen. Dieses Vorgehen führt jedoch zu einer starken Belastung der den Kurzschlussstrom führenden Wechselrichterkomponenten und steht in Widerspruch zu der beabsichtigten langen Lebensdauer aller Bauteile der verwendeten Vorrichtung.

Aus der US 7,269,036 B2 ist es bekannt, die Ermittlung der Belastbarkeit der Gleichspannungsquelle erst dann vorzunehmen, nachdem die Gleichspannungsquelle dem Wechselstromnetz bereits zugeschaltet wurde. Basierend auf der so ermittelten Belastbarkeit wird die Leerlaufspannung der Gleichspannungsquelle festgelegt, die erreicht sein muss, bevor der nächste Zuschaltversuch zu dem Wechselstromnetz unternommen wird. Auf diese Weise mag zwar ein optimierter Wert für die Leerlaufspannung als Hinweis auf eine ausreichende Belastbarkeit der Gleichspannungsquelle für die Zukunft bestimmt werden können. Hierdurch wird sich verglichen mit der Verwendung eines festen Spannungsschwellwerts für die Leerlaufspannung aber nur eine kleine Anzahl von erfolglosen Netzzuschaltungen und entsprechenden Belastungen des Netzschalters vermeiden lassen. Zudem erfolgt die Ermittlung der Belastbarkeit der dem Wechselstromnetz bereits zugeschalteten Gleichspannungsquelle gemäß der US 7,269,036 B2 unter Messung des von der Gleichspannungsquelle fließenden Gleichstroms. Eine hierfür benötigte Messeinrichtung ist bei den meisten Vorrichtungen mit Wechselrichtern, auf deren Betrieb sich die vorliegende Erfindung bezieht, nicht vorhanden.

In Dokument DE 43 28 511 A1 ist ebenfalls ein Verfahren zur Ermittlung der Belastbarkeit einer Gleichspannungsquelle offenbart.

### AUFGABE DER ERFINDUNG

Der Erfindung liegt die Aufgabe zugrunde, ein Verfahren zur Ermittlung der Belastbarkeit einer Gleichspannungsquelle mit den Merkmalen des Oberbegriffs des unabhängigen Patentanspruchs 1 aufzuzeigen, das das Zuschalten der Gleichspannungsquelle über den Wechselrichter an das Wechselstromnetz zu einem optimalen Zeitpunkt ermöglicht, bei dem weder eine Gefahr der Notwendigkeit einer neuerlichen Netztrennung besteht, noch die Gleichspannungsquelle für unnötig lange Zeiträume dem Wechselstromnetz noch nicht zugeschaltet wird.

### LÖSUNG

Erfindungsgemäß wird diese Aufgabe durch ein Verfahren mit den Merkmalen des unabhängigen Patentanspruchs 1 gelöst. Die abhängigen Patentansprüche 2 bis 13 betreffen bevorzugte Ausführungsformen des neuen Verfahrens. Der nebengeordnete Patentanspruch 14 ist auf eine Vorrichtung mit einem Wechselrichter und einer Steuereinrichtung gerichtet, die den Wechselrichter nach dem neuen Verfahren ansteuert. Der Patentanspruch 15 betrifft eine bevorzugte Ausführungsform der neuen Vorrichtung.

### BESCHREIBUNG DER ERFINDUNG

Bei dem neuen Verfahren zur Ermittlung der Belastbarkeit einer über einen Wechselrichter und einen Netzschalter einem Wechselstromnetz mit einer vorgegebenen Netzfrequenz zuschaltbaren Gleichspannungsquelle wird eine Eingangsgleichspannung des Wechselrichters, bei der es sich um die Ausgangsspannung der Gleichspannungsquelle oder eine Spannung in einem Zwischenkreis des Wechselrichters handeln kann, bei geöffnetem Netzschalter und bei einer einen Vier-Quadrantenbetrieb ermöglichenden Ansteuerung des Wechselrichters erfasst, wobei der Wechselrichter so angesteuert wird, dass er die Eingangsgleichspannung auf eine von der Netzfrequenz abweichende Prüffrequenz wechselrichtet. Abweichend bedeutet in diesem Zusammenhang, dass die Prüffrequenz sowohl niedriger als auch höher als die Netzfrequenz sein kann. Häufig wird sie bei der Erfindung höher als die Netzfrequenz sein. Bei geeigneter Wahl der Prüffrequenz in Hinblick auf den jeweiligen Wechselrichter und seine Einsatzumgebung kann auf diese Weise eine auf die Gleichspannungsquelle einwirkende Prüflast erheblich über den Eigenbedarf des Wechselrichters bei der Netzfrequenz erhöht werden. Konkret kann sie in aller Regel problemlos auf ein Niveau gebracht werden, das der Belastung der Gleichspannungsquelle bei ihrer Netzzuschaltung entspricht, so dass die Möglichkeit einer gefahrlosen Netzzuschaltung frühzeitig und sicher feststellbar ist.

Wenn der Wechselrichter bei geöffnetem Netzschalter so angesteuert wird, dass er die Eingangsgleichspannung nacheinander auf verschiedene Prüffrequenzen wechselrichtet, von denen zumindest eine von der Netzfrequenz abweicht, kann insbesondere auch das Verhalten der Gleichspannungsquelle gegenüber Laständerungen ermittelt werden. Dieses Verhalten ist neben der absoluten Belastbarkeit ein wichtiges Kriterium für die gefahrlose Zuschaltbarkeit der Gleichspannungsquelle zu dem Wechselstromnetz.

Für das Verhalten gegenüber wechselnden Belastungen ist von besonderem Interesse, wie die Gleichspannungsquelle auf Laständerungen, insbesondere auf Lastsprünge aber auch auf stetige Laständerungen, reagiert. Um diese zu simulieren, kann der Wechselrichter bei geöffnetem Netzschalter so angesteuert werden, dass die auf die Gleichspannungsquelle einwirkende Prüflast entsprechend, d. h. insbesondere stufenförmig variiert wird.

Je nach konkretem Aufbau des Wechselrichters und seiner Einsatzumgebung kann es ausreichen, dass die Prüffrequenz von der Netzfrequenz um 10 % abweicht, um eine Prüflast hervorzurufen, die klare Aussagen über die Belastbarkeit der Gleichspannungsquelle erlaubt.

Vorzugsweise weicht die Prüffrequenz von der Netzfrequenz jedoch um mindestens 20 % nach unten oder oben, mehr bevorzugt um mindestens 40 % nach unten oder oben, noch mehr bevorzugt um mindestens 60 % nach unten oder oben und am meisten bevorzugt um mindestens 100 % nach oben ab.

Bei einer Netzfrequenz in einem typischen Bereich von 50-60 Hz kann eine nach oben abweichende Prüffrequenz eine typische Größenordnung von ungefähr 1 kHz aufweisen, d. h. von etwa 500 bis 8.000 Hz betragen, so dass sie beispielsweise bei einer üblichen Taktfrequenz der schnell getakteten Schalter des Wechselrichters von 16 kHz problemlos einstellbar ist. Bei einer hiervon abweichenden Taktfrequenz der schnell getakteten Schalter des Wechselrichters kann eine Prüffrequenz aus einem anderen Bereich günstiger sein. In der Regel sollte die Prüffrequenz nicht mehr als 50 % dieser Taktfrequenz betragen.

Durch die Abweichung der Prüffrequenz von der Netzfrequenz können jedwede Wechselstromwiderstände und Schaltwiderstände im Bereich des Wechselrichters, eines Zwischenkreises oder nachgeschalteter Bauteile bis zu dem geöffneten Netzschalter ausgenutzt werden, um die Prüflast auf das gewünschte Niveau anzuheben. Besonders effektiv ist es jedoch, wenn die Prüffrequenz in die Nähe der Resonanzfrequenz eines zwischen den Wechselrichter und den Netzschalter geschalteten EMV-Filters oder einer vergleichbaren, ggf. kaskadierten geräteinternen RLC-Komponente des Wechselrichters abgestimmt wird, wobei die eigentliche Resonanzfrequenz inklusive eines definierten Toleranzbereiches mit der Prüffrequenz zu meiden ist. Ein derartiges EMV-Filter ist bei vielen Vorrichtungen vorhanden, auf deren Betrieb sich die vorliegende Erfindung bezieht. Wenn die Prüffrequenz in die Nähe der Resonanzfrequenz des EMV-Filters kommt, kann z. B. bei vergleichsweise kleiner Spannung zwischen den Ausgängen des EMV-Filters, die die Bauteilgrenzen nicht überschreitet, ein erhöhter, aber nicht unkontrollierter Wechselstrom durch den Wechselrichter erzeugt werden. Für diesen Wechselstrom kann der Wechselrichter im Vier-Quadrantenbetrieb als Lastwiderstand wirken und so die gewünschte Prüflast bereitstellen. Mit einer Überlastung oder auch nur einer die Lebensdauer des Wechselrichters signifikant reduzierenden Belastung ist dabei nicht zu rechnen, da der durch den Wechselrichter fließende Wechselstrom signifikant kleiner als der Strom ist, für den der Wechselrichter ausgelegt ist, um die maximale Leistung von der Gleichspannungsquelle in das Wechselstromnetz zu übertragen. Aus der Durchführung des oben beschriebenen Verfahrens resultiert keine den Bestand oder die Lebensdauer des Wechselrichters gefährdende Temperaturerhöhung.

Um die Prüflast, mit der die Gleichspannungsquelle durch die Abweichung der Prüffrequenz von der Netzfrequenz beaufschlagt wird, konkret zu erfassen, kann der Wechselstrom von dem und/oder eine Wechselspannung über das EMV-Filter gemessen werden. Eine absolute Bestimmung der Prüflast ist jedoch nur dann von Bedeutung, wenn die spätere Belastung der dem Wechselstromnetz zugeschalteten Gleichspannungsquelle absolut bekannt ist. In der Praxis kann es daher hinreichen, zu schauen, ob die Prüflast, die mit einer bestimmten Prüffrequenz hervorgerufen wurde, und die zu keinem übermäßigen Einbruch der Eingangsgleichspannung geführt hat, groß genug war, um die Gleichspannungsquelle vor dem Zuschalten zu dem Wechselstromnetz auf ausreichende Belastbarkeit zu prüfen. Wenn nicht, muss die Prüflast geeignet angepasst werden. Hierzu kann die Prüffrequenz in Abhängigkeit von einer bekannten Beziehung zwischen der Prüflast und der Prüffrequenz verändert werden. Der idealen Prüffrequenz kann man sich aber auch nach den Grundsätzen der Fuzzy-Logik annähern, ohne eine derartige Beziehung zu kennen oder gar ohne dass eine derartige feste Beziehung überhaupt existiert.

Mit einem derartigen Lernalgorithmus kann die Prüffrequenz an den jeweiligen Wechselrichter mit der Toleranz seiner Bauteile und dessen Betriebsumgebung zu Betriebsbeginn und laufend während seines Betriebs angepasst werden, um beispielsweise auftretende Alterungsprozesse auszugleichen.

Der Lernalgorithmus kann auf eine Datenbasis mit Vergleichsdaten zurückgreifen, um zum einen einen Aufsetzpunkt für die Prüffrequenz in der Nähe der zu erwartenden idealen Prüffrequenz zu wählen und um andererseits die Prüffrequenz von vornherein in der zielführenden Richtung zu ändern, ohne zur Bestimmung dieser zielführenden Richtung auf Versuche angewiesen zu sein. Auch die Größe der Änderung kann unter Rückgriff auf die Vergleichsdaten erfolgen.

Durchgeführt werden kann der Lernalgorithmus schrittweise beim regulären Zuschalten der Gleichspannungsquelle über den Wechselrichter zu dem Wechselstromnetz. Dabei gilt es, ein Optimum zwischen der Vermeidung erneuter Netztrennungen einerseits und dem doch möglichst frühzeitigen Zuschalten der Gleichspannungsquelle zu dem Wechselstromnetz andererseits zu finden.

Es versteht sich, dass die Gleichspannungsquelle bei der Durchführung des neuen Verfahrens nur dann durch Schließen des Netzschalters über den Wechselrichter dem Wechselstromnetz zugeschaltet wird, wenn eine als ausreichend angesehene Belastbarkeit ermittelt wurde. Diese Belastbarkeit zeigt sich als Einhaltung eines maximal gestatteten Einbruchs der Eingangsgleichspannung des Wechselrichters bei einer bestimmten Prüffrequenz. Wenn sich die so definierte Belastbarkeit für die anschließende Einspeisung von der Gleichspannungsquelle über den Wechselrichter in das Wechselstromnetz als unzureichend herausstellt, kann nicht nur, wie bereits ausgeführt, die Prüffrequenz geändert werden, sondern auch der zulässige maximale Abfall der Eingangsgleichspannung reduziert werden. Umgekehrt müssen die Anforderungen an die Belastbarkeit der Gleichspannungsquelle vor dem Zuschalten so klein wie möglich belassen werden, um die Gleichspannungsquelle möglichst früh mit dem Wechselstromnetz zu verbinden.

Eine Vorrichtung zur Durchführung des neuen Verfahrens weist eine Steuereinrichtung auf, die den Wechselrichter nach dem neuen Verfahren ansteuert. Vorzugsweise umfasst die Vorrichtung dabei ein EMV-Filter, das zwischen den Wechselrichter und den Netzschalter geschaltet ist.

Vorteilhafte Weiterbildungen der Erfindung sind in den Patentansprüchen definiert.

### KURZBESCHREIBUNG DER FIGUREN

Die Erfindung wird im Folgenden anhand eines konkreten Ausführungsbeispiels unter Bezugnahme auf die beigefügten Zeichnungen näher erläutert und beschrieben.
- **Fig. 1**: zeigt den Aufbau einer Vorrichtung zur Einspeisung von elektrischer Energie von einer Gleichspannungsquelle in ein Wechselstromnetz während der Durchführung des erfindungsgemäßen Verfahrens zur Bestimmung der Belastbarkeit der Gleichspannungsquelle; und
- **Fig. 2**: skizziert ein Steuerprogramm zur Durchführung des erfindungsgemäßen Verfahrens.

### FIGURENBESCHREIBUNG

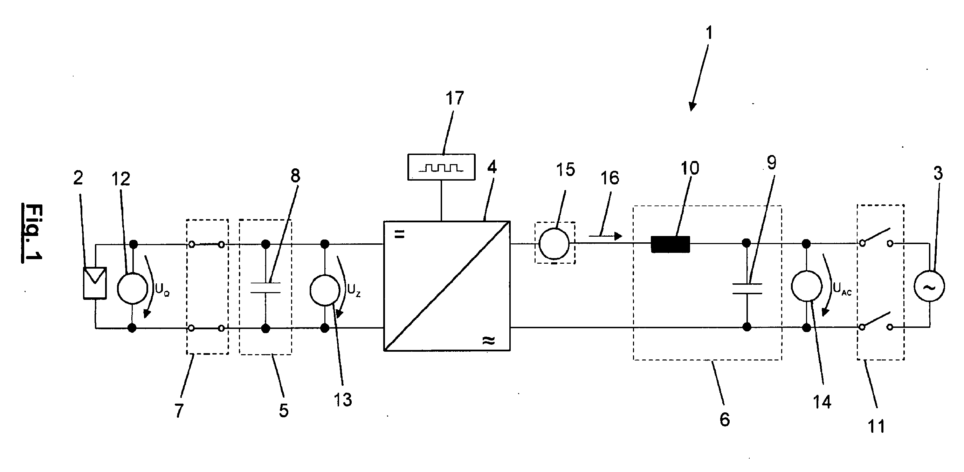

Die in **Fig. 1** skizzierte Vorrichtung 1 dient zur Einspeisung von elektrischer Energie von einer Gleichspannungsquelle 2 in ein Wechselstromnetz 3. Die Vorrichtung 1 umfasst einen Wechselrichter 4 mit einem vorgeschalteten Zwischenkreis 5 und einem nachgeschalteten EMV-Filter 6. Die Gleichspannungsquelle 2 wird dem Wechselrichter 4 über einen Schalter 7 zugeschaltet, der in Fig. 1 geschlossen ist. Der Zwischenkreis 5 ist hier ein Spannungszwischenkreis mit einem Zwischenkreiskondensator 8. Das EMV-Filter weist im vorliegenden Ausführungsbeispiel einen EMV-Kondensator 9 und eine EMV-Drossel 10 auf. Allgemein können Ausführungsformen der vorliegenden Erfindung auf jedweden RLC-Kombinationen basieren, die auch geräteintern vorgesehen und von einem EMV-Filter abweichend, ggf. kaskadierend, ausgebildet sein können. Das EMV-Filter 6 ist zwischen den Wechselrichter 4 und einen Netzschalter 11 geschaltet, um bei geschlossenem Netzschalter 11 dem Wechselstromnetz 3 periodischen, z.B. sinusförmigen Wechselstrom zur Verfügung zu stellen. Der Netzschalter 11 ist wie der Schalter 7 zum Beispiel als Relais oder Schütz ausgeführt. Während des erfindungsgemäßen Bestimmens der Belastbarkeit der Gleichspannungsquelle 2 ist der Netzschalter 11 geöffnet, wie in Fig. 1 gezeigt ist. Die Vorrichtung 1 umfasst mehrere Messeinrichtungen. Ein Spannungsmesser 12 misst die Ausgangsspannung U_{Q} der Gleichspannungsquelle 2. Die Zwischenkreisspannung U_{z} über dem Zwischenkreiskondensator 8 wird durch einen Spannungsmesser 13 gemessen. Die Spannung A_{AC} am Ausgang des EMV-Filters 6 misst ein Spannungsmesser 14. Optional wird mit einem Strommesser 15 der Wechselstrom 16 auf der Wechselstromseite des Wechselrichters 4 gemessen. Angesteuert wird der Wechselrichter 4 von einer Steuerung 17, die insbesondere die Frequenz festlegt, auf die der Wechselrichter 4 richtet. Daneben steuert die Steuereinrichtung 17 die einzelnen Schalter des Wechselrichters 4 nach dem Konzept der Pulsbreitenmodulation hochfrequent so an, dass der Wechselstrom 16 auch schon vor dem EMV-Filter 6 ungefähr sinusförmig ist. Zum Beispiel steigt die Ausgangsspannung U_{Q} im Falle einer Photovoltaikanlage als Gleichspannungsquelle 2 mit der Einstrahlungsintensität nach Sonnenaufgang an. Wenn ein gewisser Wert von U_{Q} erreicht ist, wird die Vorrichtung 1 in Betrieb genommen und der Schalter 7 geschlossen. Der Wechselrichter 4 beginnt im Leerlauf zu arbeiten. Um bei einem anschließenden Schließen des Netzschalters 11 und der damit einhergehenden Verbindung der Gleichspannungsquelle 2 über den Wechselrichter 4 mit dem Wechselstromnetz 3 keinen Einbruch der Spannungen U_{Q} und U_{z} zu erleiden, weil die Belastbarkeit der Gleichspannungsquelle 2 für die Netzeinspeisung noch unzureichend ist, wird vor dem Schließen des Netzschalters 11 die Belastbarkeit der Gleichspannungsquelle 2 durch Belasten derselben mit einer Prüflast und gleichzeitiges Erfassen einer Eingangsgleichspannung des Wechselrichters in Form der Ausgangsspannung U_{Q} der Gleichspannungsquelle 2 und/oder der Zwischenkreisspannung U_{z} ermittelt. Um die Gleichspannungsquelle 2 bei geöffnetem Netzschalter 11 mit dieser Prüflast zu beaufschlagen, steuert die Steuerung 17 den Wechselrichter 4 so an, dass ein Vier-Quadrantenbetrieb ermöglicht ist und dass der Wechselstrom 16 nicht auf die Netzfrequenz des Wechselstromnetzes 3, sondern auf eine von dieser abweichenden Prüffrequenz gerichtet wird. Hierdurch wird/werden das ausgangsseitig angeschlossene EMV-Filter 6 und/oder eine oder mehrere vergleichbare RLC-Komponente(n) des Wechselrichters 4 zu erzwungenen Schwingungen angeregt. Je nach Nähe der Prüffrequenz zu der Resonanzfrequenz des EMV-Filters 6 tritt eine Spannungs- und/oder Stromüberhöhung an der EMV-Drossel 10 und dem EMV-Kondensator 9 des EMV-Filters 6 auf. Durch geeignete Wahl der Prüffrequenz, auf die der Wechselrichter 4 richtet, ist z.B. ein erhöhter Wechselstrom 16 zwischen dem Wechselrichter 4 und dem EMV-Filter 6 bei die Bauteilgrenzen gleichzeitig nicht überschreitender Spannung an dem EMV-Kondensator 9 realisierbar. Abhängig z. B. von diesem erhöhten Wechselstrom 16 ergeben sich u. a. Schaltverluste von Brückenhalbleitern des Wechselrichters 4. Da der Wechselstrom 16 durch die Prüffrequenz, auf die der Wechselrichter 4 richtet, veränderbar ist, kann damit die in dem Wechselrichter 4 auftretende Verlustleistung variiert werden. Diese Verlustleistung wirkt als Prüflast auf die Gleichspannungsquelle 2 und muss von dieser kompensiert werden, was je nach der der Gleichspannungsquelle 2 gegenwärtig entnehmbaren elektrischen Leistung unterschiedliche Zeitspannen in Anspruch nimmt. Eine Netzzuschaltung durch Schließen des Netzschalters 11 ist erst dann sinnvoll, wenn die Prüflast unter den aktuell gegebenen Bedingungen von der Gleichspannungsquelle 2 sofort bereitgestellt werden kann, so dass die beobachtete Eingangsgleichspannung U_{Q} oder U_{z} nicht stärker als um einen definierten Grenzwert einbricht. Die eingestellte Prüflast wird in dem Wechselrichter 4 in Wärme umgesetzt. Die resultierende Erwärmung des Wechselrichters 4 ist jedoch bei jeder sinnvollen Umsetzung des neuen Verfahrens unkritisch. Für die Bestimmung der Belastbarkeit der Gleichspannungsquelle 2 wird selektiv eine Prüffrequenz des Wechselrichters eingestellt, die entsprechend der beabsichtigten Prüflast eine die Bauteilgrenzen übersteigende Spannung bzw. Strom an den für das Verfahren verwendeten RLC-Komponeneten vermeidet.

Aufgrund von Bauteiltoleranzen und Alterungseffekten verfügt jeder Wechselrichter 4 in Kombination mit einem bestimmten EMV-Filter 6 über eine individuelle - für eine vorgegebene Prüflast notwendige - augenblickliche Prüffrequenz. Dabei kann sich auch die Prüflast selbst, die von der Gleichspannungsquelle 2 augenblicklich bereitgestellt werden muss, um ein sicheres Zuschalten zu dem Wechselstromnetz 3 zu gewährleisten, beispielsweise mit Variationen des Wechselstromnetzes 3 ändern. Eine vorteilhafte Ausführungsform des neuen Verfahrens sieht daher vor, die Prüffrequenz des Wechselrichters 4, mit der die Belastbarkeit der Gleichspannungsquelle 2 ermittelt wird, durch einen adaptiven, vollautomatischen Lernalgorithmus individuell an den aktuellen Zustand und die aktuellen Betriebsbedingungen des jeweiligen Wechselrichters anzupassen. Diese adaptive Einstellung der Prüffrequenz kann schrittweise bei regulären Zuschaltversuchen vorgenommen werden. Dabei ist es vorteilhaft, schnellstmöglich nach erfolgreicher Netzzuschaltung die von dem Wechselrichter 4 in das Wechselstromnetz 3 eingespeiste Leistung zu messen und die Prüfleistung durch Veränderung der Prüffrequenz für die nächste Ermittlung der Belastbarkeit der Gleichspannungsquelle 2 vor dem nächsten Schließen des Netzschalters 11 dahingehend zu optimieren, dass der Betrag der im Zuschaltmoment in das Wechselstromnetz eingespeisten Leistung schrittweise minimiert wird. Dadurch wird gewährleistet, dass die Gleichspannungsquelle 2 dem Wechselstromnetz 3 möglichst früh zugeschaltet wird. Eine Netzzuschaltung wird nach dem erfindungsgemäßen Ermitteln der Belastbarkeit der Gleichspannungsquelle 2 dann vorgenommen, wenn die Spannung U_{z} am Zwischenkreis des an die Gleichspannungsquelle 2 angeschlossenen Wechselrichters 4 und/oder die Ausgangsspannung U_{Q} der Gleichspannungsquelle 2 trotz aktivierter Prüflast stabil bleibt. Dabei werden etwaige Maßnahmen, die die Eingangsgleichspannung des Wechselrichters im normalen Netzeinspeisebetrieb gegebenenfalls konstant halten, sinnvoller Weise deaktiviert. In Versuchen hat sich herausgestellt, dass geeignete gegenüber der Netzfrequenz erhöhte Prüffrequenzen typischerweise im Bereich von 110 % der Netzfrequenz des Wechselstromnetzes 3 beginnen und von dort bei einer Taktfrequenz des Wechselrichters von 16kHz bis etwa 8 kHz reichen können. Bei einer abweichenden Taktfrequenz ist der Bereich der Prüffrequenz entsprechend zu dimensionieren. Die konkreten Prüffrequenzen ergeben sich daraus, dass das neue Verfahren die Flanken des Amplitudenresonanzverhaltens des EMV-Filters 6 ausnutzt. Gestartet werden kann das erfindungsgemäße Verfahren zur Ermittlung der Belastbarkeit der Gleichspannungsquelle 2 beispielsweise dann, wenn die Differenz aus einer bei geöffnetem Netzschalter 11 vom Wechselrichter 4 erzeugten Wechselspannung mit Netzfrequenz, bei einer Taktung des Wechselrichters 4, die einen Vier-Quadrantenbetrieb ermöglicht, und der bei geöffnetem Netzschalter 11 gemessenen Netzscheitelspannung des Wechselstromnetzes einen Schwellwert übersteigt. Hierdurch wird eine automatische Anpassung der Aktivierung des erfindungsgemäßen Verfahrens an die augenblicklichen Gegebenheiten des Wechselstromnetzes 3 erreicht.

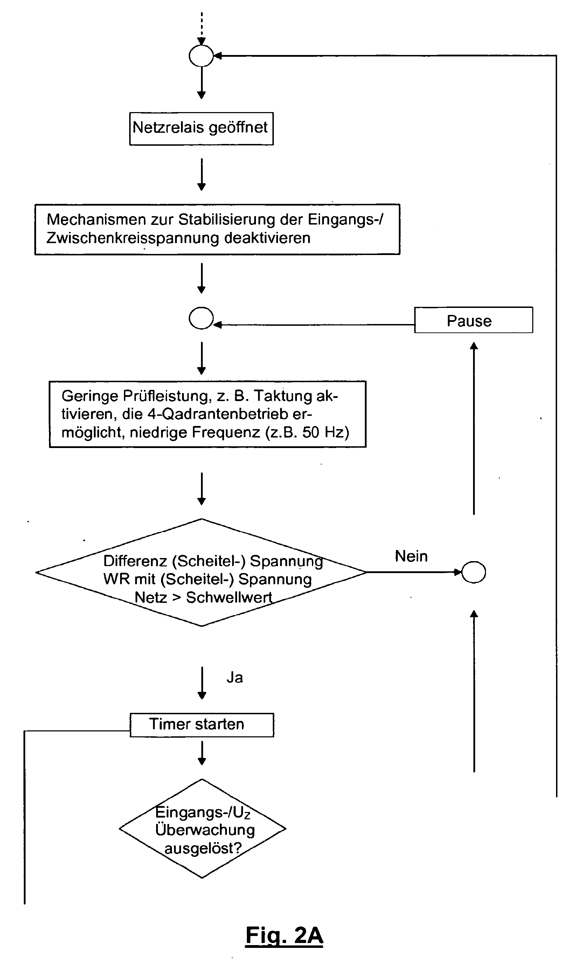

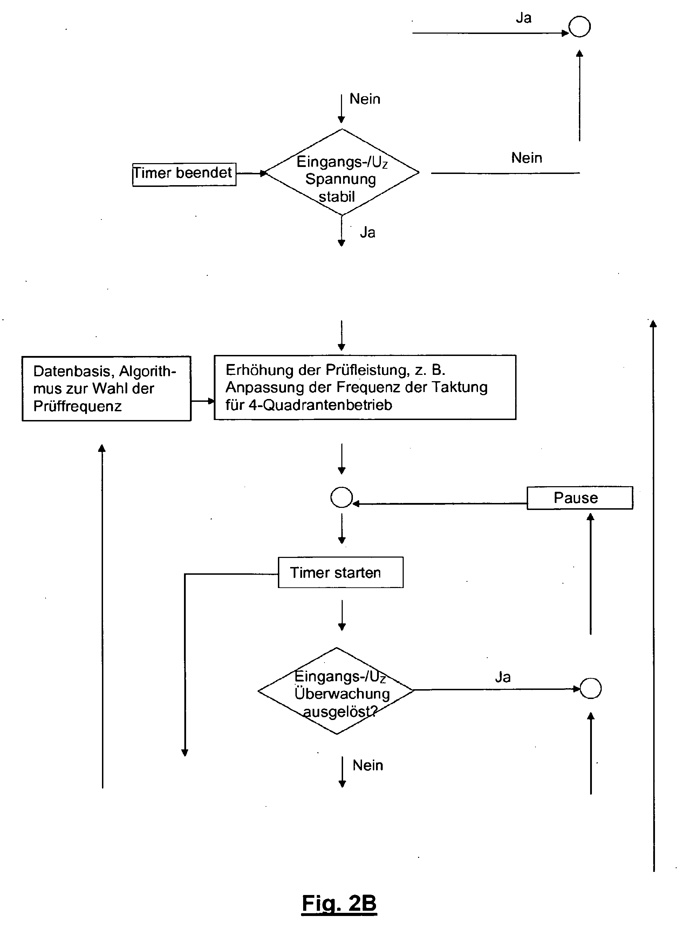

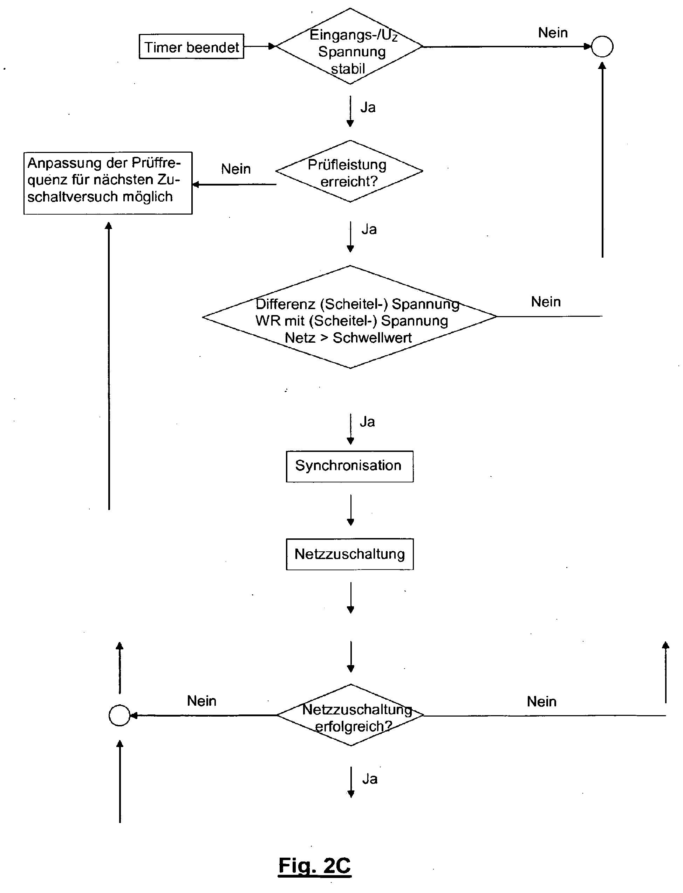

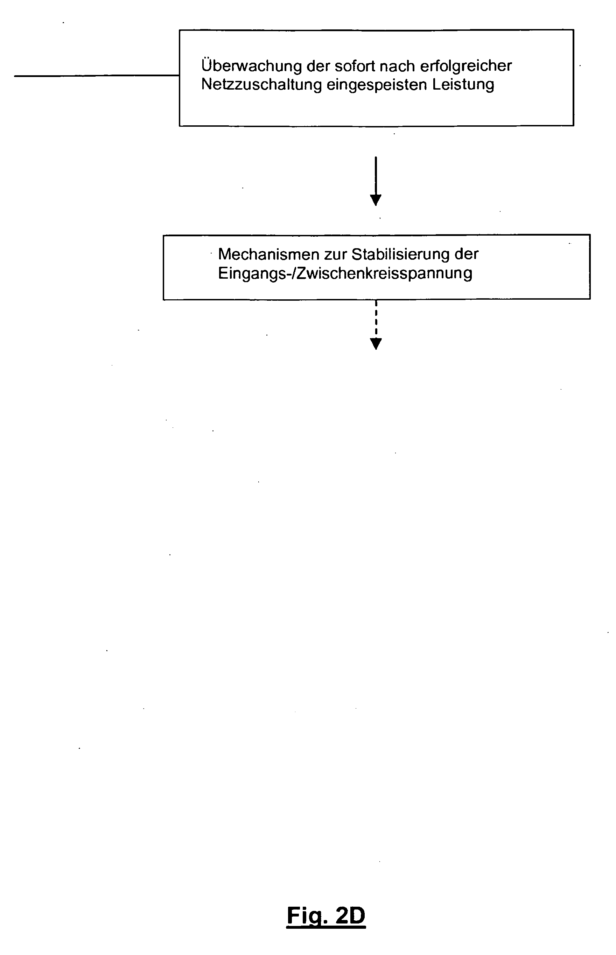

Bei dem erfindungsgemäßen Verfahren ergibt sich beispielsweise der in **Fig. 2** wiedergegebene Ablaufplan. Ausgangspunkt ist der erfolgreiche Abschluss aller Systemtests vor Erreichen des Netzzuschaltverfahrens, das heißt, der Netzschalter 11 ist geöffnet. Um Auswirkungen einer Belastung der Gleichspannungsquelle 2 durch den Wechselrichter 4 detektieren zu können, werden alle Wechselrichtermechanismen für die Stabilisierung des Zwischenkreises 5 deaktiviert. Anschließend wird die Gleichspannungsquelle 2 zunächst mit einer geringen Prüflast beaufschlagt, zum Beispiel durch die Aktivierung einer Taktung des Wechselrichters 4, die einen Vier-Quadrantenbetrieb ermöglicht. In einem solchen Fall ist es vorteilhaft, wenn der Wechselrichter 4 auf die Netzfrequenz des Wechselstromnetzes 3 richtet. Überschreitet die Differenz aus dem Scheitelwert der Ausgangsspannung des Wechselrichters 4 und dem Scheitelwert der Wechselspannung des Wechselstromnetzes 3 einen definierten Schwellwert dabei noch nicht, wird der Wechselrichter 4 zu einer Pause veranlasst, nach deren Ende er erneut mit der Aktivierung der zunächst kleinen Prüflast fortfährt. Wird hingegen der bereits genannte Schwellwert überschritten, wird ein Timer gestartet. Sollte sich die Zwischenkreisspannung U_{z} durch die aktivierte Prüflast vor Ablauf dieses Timers zu stark verringert haben, was auf eine unzureichende Belastbarkeit der Gleichspannungsquelle 2 hinweist, geht der Wechselrichter 4 wiederum in den Pausenzustand über. Dieser Zustand wird auch eingenommen, wenn die Zwischenkreisspannung U_{z} nach Ablauf des Timers abgesunken ist. Bleibt die Zwischenkreisspannung U_{z} hingegen während der geringen Prüfbelastung stabil, kann die Prüfbelastung in einem nächsten Schritt erhöht werden, indem die Prüffrequenz, auf die der Wechselrichter 4 richtet, bei Beibehaltung des Vier-Quadrantenbetriebs in geeigneter Weise gegenüber der Netzfrequenz verändert wird. Erneut wird der Timer gestartet, der die Veränderung der Zwischenkreisspannung U_{z} in Hinblick auf die jetzt größere Prüflast detektiert. Bricht die Zwischenkreisspannung U_{z} unter der größeren Prüflast ein (unabhängig davon, ob der Timer seinen Endwert erreicht hat), wird die Prüfbelastung nach Ablauf einer Pause wiederholt. Sollte die Prüflast keine Auswirkung auf die Zwischenkreisspannung U_{z} haben und die getestete Prüflast die für die Netzzuschaltung erforderliche Prüflast gewesen sein, wird erneut die Differenz der Scheitelspannung der Wechselrichterausgangsspannung beim Richten des Wechselrichters auf die Netzfrequenz und der Scheitelspannung der Wechselspannung des Wechselstromnetzes 3 gebildet. Übersteigt diese Differenz einen definierten Schwellwert nicht, muss nach Ablauf einer Pause die zuletzt eingestellte Prüflast erneut getestet werden. Wird umgekehrt der genannte Schwellwert erreicht, kann eine Synchronisation der Wechselrichterausgangsspannung mit derjenigen des Wechselstromnetzes vorgenommen und ein Netzzuschaltversuch unternommen werden. Sollte dieser Netzzuschaltversuch unter Schließen des Netzschalters 11 erfolgreich sein, wird sofort nach der Zuschaltung die vom Wechselrichter 4 in das Wechselstromnetz 3 eingespeiste Leistung gemessen und in einem weiteren Schritt die erforderliche Prüffrequenz für nachfolgende Netzzuschaltungen angepasst. Danach können alle Mechanismen zur Stabilisierung der Zwischenkreisspannung U_{z} aktiviert werden. War die Netzzuschaltung nicht erfolgreich, beginnt der Wechselrichter mit der nächsten Zuschaltprüfung. Dabei wird die für die Netzzuschaltung erforderliche Prüflast erhöht.

### BEZUGSZEICHENLISTE

- 1: Vorrichtung
- 2: Gleichspannungsquelle
- 3: Wechselstromnetz
- 4: Wechselrichter
- 5: Zwischenkreis
- 6: EMV-Filter
- 7: Schalter
- 8: Zwischenkreiskondensator
- 9: EMV-Kondensator
- 10: EMV-Drossel
- 11: Netzschalter
- 12: Spannungsmesser
- 13: Spannungsmesser
- 14: Spannungsmesser
- 15: Strommesser
- 16: Wechselstrom
- 17: Steuereinrichtung
- U_{Q}: Ausgangsspannung der Gleichspannungsquelle 2
- U_{z}: Zwischenkreisspannung
- U_{AC}: Wechselspannung am Ausgang des EMV-Filters 6

## Patentansprüche

1. Verfahren zur Ermittlung der Belastbarkeit einer über einen Wechselrichter und einen Netzschalter einem Wechselstromnetz mit einer vorgegebenen Netzfrequenz zuschaltbaren Gleichspannungsquelle, wobei eine Eingangsgleichspannung bei geöffnetem Netzschalter und bei einer einen Vier-Quadrantenbetrieb ermöglichenden Ansteuerung des Wechselrichters erfasst wird, **dadurch gekennzeichnet, dass** der Wechselrichter (4) bei geöffnetem Netzschalter (11) so angesteuert wird, dass er die Eingangsgleichspannung (U_{Q}, U_{z}) auf eine von der Netzfrequenz abweichende Prüffrequenz wechselrichtet, um eine auf die Gleichspannungsquelle (2) einwirkende Prüflast über den Eigenbedarf des Wechselrichters (4) bei der Netzfrequenz hinaus zu erhöhen.

2. Verfahren nach Anspruch 1, **dadurch gekennzeichnet, dass** der Wechselrichter (4) bei geöffnetem Netzschalter (11) so angesteuert wird, dass er die Eingangsgleichspannung (U_{Q}, U_{z}) nacheinander auf verschiedene Prüffrequenzen wechselrichtet.

3. Verfahren nach Anspruch 2, **dadurch gekennzeichnet, dass** der Wechselrichter (4) bei geöffnetem Netzschalter (11) so angesteuert wird, dass die auf die Gleichspannungsquelle (2) einwirkende Prüflast stufenförmig variiert wird.

4. Verfahren nach einem der Ansprüche 1 bis 3, **dadurch gekennzeichnet, dass** die Prüffrequenz von der Netzfrequenz nach unten oder oben um mindestens 10 %, vorzugsweise nach unten oder oben um mindestens 20 %, mehr bevorzugt nach unten oder oben um mindestens 40 %, noch mehr bevorzugt nach unten oder oben um mindestens 60 % und am meisten bevorzugt nach oben um mindestens 100 % abweicht.

5. Verfahren nach Anspruch 4, **dadurch gekennzeichnet, dass** die Prüffrequenz bei einer Netzfrequenz im Bereich von 50 bis 60 Hz in einem Bereich von 500 Hz bis zu 50 % einer Taktfrequenz liegt, mit der schnell getaktete Schalter des Wechselrichters getaktet werden.

6. Verfahren nach einem der Ansprüche 1 bis 5, **dadurch gekennzeichnet, dass** die Prüffrequenz in die Nähe der Resonanzfrequenz eines zwischen den Wechselrichter (4) und den Netzschalter (11) geschalteten EMV-Filters (6) und/oder einer RLC-Komponente des Wechselrichters (4) abgestimmt wird, wobei die Resonanzfrequenz selbst vermieden wird.

7. Verfahren nach Anspruch 6, **dadurch gekennzeichnet, dass** mit Hilfe einer frequenzabhängigen Impedanz des EMV-Filters (6) und/oder einer RLC-Komponente des Wechselrichters ein Wechselstrom (16) durch den Wechselrichter (4) erzeugt wird.

8. Verfahren nach Anspruch 7, **dadurch gekennzeichnet, dass** der Wechselrichter (4) als Lastwiderstand für den Wechselstrom (16) betrieben wird.

9. Verfahren nach einem der Ansprüche 7 und 8, **dadurch gekennzeichnet, dass** der Wechselstrom (16) und/oder eine Wechselspannung über das EMV-Filter (6) oder die RLC-Komponente des Wechselrichters zur Erfassung der Prüflast gemessen wird.

10. Verfahren nach einem der Ansprüche 1 bis 9, **dadurch gekennzeichnet, dass** die Prüffrequenz durch einen Lernalgorithmus an den jeweiligen Wechselrichter (4) und dessen Betriebsumgebung angepasst wird.

11. Verfahren nach Anspruchs 10, **dadurch gekennzeichnet, dass** der Lernalgorithmus schrittweise beim regulären Zuschalten der Gleichspannungsquelle (2) über den Wechselrichter (4) zu dem Wechselstromnetz (3) ausgeführt wird.

12. Verfahren nach Anspruch 10, **dadurch gekennzeichnet, dass** der Lernalgorithmus auf eine Datenbasis mit Vergleichsdaten zurückgreift

13. Verfahren nach einem der Ansprüche 1 bis 12, **dadurch gekennzeichnet, dass** die Gleichspannungsquelle (2) nur dann durch Schließen des Netzschalters (11) über den Wechselrichter (4) dem Wechselstromnetz (3) zugeschaltet wird, wenn eine ausreichende Belastbarkeit ermittelt wurde.

14. Vorrichtung mit einem Wechselrichter (4) und einem Netzschalter (11), um eine Gleichspannungsquelle (2) an ein Wechselstromnetz (3) mit einer vorgegebenen Netzfrequenz anzuschließen, mit einer Messeinrichtung (12, 13), um eine Eingangsgleichspannung (U_{Q}, U_{z}) des Wechselrichters (4) zu erfassen, sowie mit einer Steuereinrichtung (17), die den Wechselrichter nach dem Verfahren nach einem der Ansprüche 1 bis 13 ansteuert.

15. Vorrichtung nach Anspruch 14, **dadurch gekennzeichnet, dass** zwischen den Wechselrichter (4) und den Netzschalter (11) ein EMV-Filter (6) geschaltet ist.

## Claims

1. Method of determining the rating of a DC voltage source connectable to an AC power grid having a predetermined grid frequency via an inverter and a power switch, wherein an input DC voltage is measured with open power switch and while controlling the inverter in a way allowing for a four-quadrant operation, **characterised in that** the inverter (4) with open power switch (11) is controlled in such a way that it inverts the input DC voltage (U_{Q}, U_{z}) to a test frequency deviating from the grid frequency to increase a test load impacting on the DC voltage source (2) beyond the station supply of the inverter at the grid frequency.

2. Method of clam 1, **characterised in that** the inverter (4) with open power switch (11) is controlled in such a way that it inverts the input DC voltage (U_{Q}, U_{z}) successively to different test frequencies.

3. Method of claim 2, **characterised in that** the inverter (4) with open power switch (11) is controlled in such a way that it varies the test load impacting on the DC voltage source stepwise.

4. Method of any of the claims 1 to 3, **characterised in that** the test frequency deviates from the grid frequency downwardly or upwardly by at least 10 %, preferably downwardly or upwardly by at least 20 %, more preferably downwardly or upwardly by at least 40 %, even more preferably downwardly or upwardly by at least 60 %, and most preferably upwardly by at least 100 %.

5. Method of claim 4, **characterised in that** the test frequency, at a grid frequency in the range of 50 to 60 Hz, is in a range from 500 Hz up to 50 % of a pulse frequency at which quickly pulsed switches of the inverter are pulsed.

6. Method of any of the claims 1 to 5, **characterised in that** the test frequency is tuned to be close to a resonance frequency of an EMC filter (6) connected between the inverter (4) and the power switch (11) and/or of an RLC component of the inverter (4), wherein the resonance frequency itself is avoided.

7. Method of claim 6, **characterised in that** an AC current (16) through the inverter (4) is generated by means of a frequency-dependent impedance of the EMC filter (6) and/or an RLC component of the inverter.

8. Method of claim 7, **characterised in that** the inverter (4) is operated as a load resistance to the AC current (16).

9. Method of any of the claims 7 and 8, **characterised in that** the AC current (16) and/or an AC voltage across the EMC filter (6) or the RLC component of the inverter is measured for measuring the test load.

10. Method of any of the claims 1 to 9, **characterised in that** the test frequency is adjusted via a learning algorithm to the respective inverter (4) and its operation surroundings.

11. Method of claim 10, **characterised in that** the learning algorithm is executed step by step during regularly connecting the DC voltage source (2) to the AC power grid (3) via the inverter (4).

12. Method of claim 10, **characterised in that** the learning algorithm accesses a data base comprising comparison data.

13. Method of any of the claims 1 to 12, **characterised in that** the DC voltage source (2) is only connected to the AC power grid (3) via the inverter (4) by closing the power switch (11), if a sufficient rating has been determined.

14. Apparatus comprising an inverter (4) and a power switch (11) to connect a DC voltage source (2) to an AC power grid (3) having a predetermined grid frequency, comprising a measurement device (12, 13) to measure an input DC voltage (U_{Q}, U_{z}) of the inverter (4) and comprising a control device (17) which controls the inverter according to the method of any of the claims 1 to 13.

15. Apparatus according to claim 14, **characterised in that** an EMC filter (6) is connected between the inverter (4) and the power switch (11).

## Revendications

1. Procédé de détermination de la capacité de charge d'une source de tension continue pouvant être raccordée à un réseau à courant alternatif, à une fréquence réseau prédéfinie, par le biais d'un onduleur et d'un interrupteur, sachant qu'une tension continue d'entrée est relevée lorsque l'interrupteur est ouvert et lors d'une commande d'amorçage de l'onduleur permettant un fonctionnement à quatre cadrans, **caractérisé en ce que** l'onduleur (4) est commandé, lorsque l'interrupteur (11) est ouvert, de telle sorte qu'il convertit la tension continue d'entrée (U_{Q}, U_{Z}) en une fréquence d'essai divergeant de la fréquence réseau afin d'augmenter une charge d'essai, agissant sur la source de tension continue (2), au-delà des besoins auxiliaires de l'onduleur (4) lors de la fréquence réseau.

2. Procédé selon la revendication 1, **caractérisé en ce que** l'onduleur (4) est commandé, lorsque l'interrupteur (11) est ouvert, de telle sorte qu'il convertit la tension continue d'entrée (U_{Q}, U_{Z}) en différentes fréquences d'essai successivement.

3. Procédé selon la revendication 2, **caractérisé en ce que** l'onduleur (4) est commandé, lorsque l'interrupteur (11) est ouvert, de telle sorte que la charge d'essai, agissant sur la source de tension continue (2), est modulée par paliers.

4. Procédé selon l'une quelconque des revendications 1 à 3, **caractérisé en ce que** la fréquence d'essai diverge de la fréquence réseau vers le bas ou le haut d'au moins 10 %, de préférence vers le bas ou le haut d'au moins 20 %, de manière plus préférée vers le bas ou le haut d'au moins 40 %, de manière encore plus préférée vers le bas ou le haut d'au moins 60 % et de la manière la plus préférée de toutes vers le haut d'au moins 100 %.

5. Procédé selon la revendication 4, **caractérisé en ce que** la fréquence d'essai se situe, pour une fréquence réseau dans une plage comprise entre 50 et 60 Hz, dans une fourchette allant de 500 Hz à 50 % d'une fréquence d'horloge à laquelle sont synchronisés les commutateurs à synchronisation rapide de l'onduleur.

6. Procédé selon l'une quelconque des revendications 1 à 5, **caractérisé en ce que** la fréquence d'essai est adaptée à proximité de la fréquence de résonance d'un filtre CEM (6) monté entre l'onduleur (4) et l'interrupteur (11) et/ou d'une composante RLC de l'onduleur (4), la fréquence de résonance même étant évitée.

7. Procédé selon la revendication 6, **caractérisé en ce qu'**on produit, à l'aide d'une impédance, dépendante de la fréquence, du filtre CEM (6) et/ou d'une composante RLC de l'onduleur, un courant alternatif (16) à travers l'onduleur (4).

8. Procédé selon la revendication 7, **caractérisé en ce que** l'onduleur (4) fonctionne en tant que résistance de charge pour le courant alternatif (16).

9. Procédé selon l'une quelconque des revendications 7 et 8, **caractérisé en ce que** le courant alternatif (16) et/ou une tension alternative sont mesurés par le biais du filtre CEM (6) ou de la composante RLC de l'onduleur pour le relevé de la charge d'essai.

10. Procédé selon l'une quelconque des revendications 1 à 9, **caractérisé en ce que** la fréquence d'essai est adaptée, par un algorithme d'apprentissage, à l'onduleur respectif (4) et à son environnement d'exploitation.

11. Procédé selon la revendication 10, **caractérisé en ce que** l'algorithme d'apprentissage est exécuté progressivement lors de la connexion normale de la source de tension continue (2) au réseau de courant alternatif (3) par le biais de l'onduleur (4).

12. Procédé selon la revendication 10, **caractérisé en ce que** l'algorithme d'apprentissage recourt à une base de données comportant des données de comparaison.

13. Procédé selon l'une quelconque des revendications 1 à 12, **caractérisé en ce que** la source de tension continue (2) est uniquement connectée au réseau de courant alternatif (3) par la fermeture de l'interrupteur (11), par le biais de l'onduleur (4), lorsqu'une capacité de charge suffisante a été détectée.

14. Dispositif comportant un onduleur (4) et un interrupteur (11) pour raccorder une source de tension continue (2) à un réseau de courant continu (3) à une fréquence réseau prédéfinie, comportant un dispositif de mesure (12, 13) pour relever une tension continue d'entrée (U_{Q}, U_{Z}) de l'onduleur (4) ainsi qu'un dispositif de commande (17) qui commande l'onduleur conformément au procédé selon l'une quelconque des revendications 1 à 13.

15. Dispositif selon la revendication 14, **caractérisé en ce qu'**on a monté un filtre CEM (6) entre l'onduleur (4) et l'interrupteur (11).
